# EUROPEAN PATENT SPECIFICATION

(11) **EP 1 310 662 B1**
(45) Date of publication and mention of the grant of the patent: **29.09.2010**
(21) Application number: 03002979.7
(22) Date of filing: 02.08.2000
(51) Int. Cl.: F02M 35/10, F02M 35/02

(54) **Intake control system for engine**
Einlassteuersystem für eine Brennkraftmaschine
Système de commande d'admission pour moteur

(30) Priority: 02.09.1999 JP 24904099
(43) Date of publication of application: 14.05.2003
(62) Divisional of application: 00116710.5
(73) Proprietor: HONDA GIKEN KOGYO KABUSHIKI KAISHA, Minato-ku, Tokyo (JP)
(72) Inventor: Yamada, Hajime, 4-1 Chuo,1-chome, Wako-shi, Saitama (JP); Nakagome, Hirosi, 4-1 Chuo,1-chome, Wako-shi, Saitama (JP); Nakayasu, Tetsuya, 4-1 Chuo,1-chome, Wako-shi, Saitama (JP); Hamada, Akihiro, 4-1 Chuo,1-chome, Wako-shi, Saitama (JP)
(74) Representative: Liska, Horst

(56) References cited:
- US-A- 4 890 586
- US-A- 5 307 771
- PATENT ABSTRACTS OF JAPAN vol. 013, no. 274 (M-841), 23 June 1989 (1989-06-23) & JP 01 073115 A (NIPPON DENSO CO LTD), 17 March 1989 (1989-03-17)
- PATENT ABSTRACTS OF JAPAN vol. 018, no. 491 (M-1672), 13 September 1994 (1994-09-13) & JP 06 159072 A (TOYODA SPINNING & WEAVING CO LTD;OTHERS: 01), 7 June 1994 (1994-06-07)
- PATENT ABSTRACTS OF JAPAN vol. 016, no. 127 (M-1227), 31 March 1992 (1992-03-31) & JP 03 290052 A (NIPPONDENSO CO LTD;OTHERS: 01), 19 December 1991 (1991-12-19)

## Description

The present invention relates to an engine intake control system for a motorcycle in which a parallel multi-cylinder engine with a cylinder block and a cylinder head inclined forwards is mounted on a body frame, wherein an intake system for the parallel multi-cylinder engine is controlled according to the operating condition thereof so as to display a good output performance over a region from a low speed rotational range to a high speed rotational range.

Hitherto, as an intake control system for a motorcycle, one in which a relief valve automatically opened by an air pressure difference between the upstream side and the downstream side when the intake amount reaches or exceeds a predetermined value is attached to an air inlet of an air cleaner in an intake system and the relief valve is provided with a small vent hole has been known, as disclosed in JP 58-155270 A.

The engine intake control system disclosed in the JP 58-155270 A is so designed that in a low speed rotational range of the engine, when the engine is rapidly accelerated by rapidly opening the throttle valve, the intake amount is restricted by the small vent hole so as thereby to suppress leaning of the air-fuel mixture taken into the engine and to ensure a good accelerating performance, and, on the other hand, when the engine comes into a high speed rotational range, the relief valve opens attendant on an increase of the intake amount by not less than a predetermined value so as thereby to contrive a reduction in intake resistance.

In the above system, however, since the relief valve is biased by a spring in a valve-closing direction, the spring load constitutes a resistance against the opening of the relief valve, and an intake resistance corresponding thereto is left.

US 4 890 586 discloses an engine intake control system for a motorcycle in which a multi-cylinder engine with a cylinder block and a cylinder head is mounted on a body frame, a plurality of throttle bodies corresponding to each cylinder are connected to a back surface of said cylinder head, and an air cleaner for cleaning air flowing into said throttle bodies is disposed; a plurality of passages, extending in parallel to each other, for communication between an air inlet of said air cleaner and said plurality of throttle bodies are formed in said air cleaner, and an intake control valve for opening/closing at least one passage of said plurality of passages is provided in said air cleaner.

US 5 307 771 A, JP 01 073115 A and JP 06 159072 A each show an engine intake control system for an engine, wherein a plurality of passages, extending in parallel to each other, for communication between an air inlet of an air cleaner and a plurality of throttle bodies are formed in said air cleaner, and an intake control valve for opening/closing at least one passage of said plurality of passages is provided in said air cleaner.

The present invention has been made in consideration of the above-mentioned circumstances, and, accordingly, it is an object of the present invention to provide a compact engine intake control system for the above-mentioned motorcycle which is capable of contributing to improvement of output performance by securely reducing the intake resistance in the high speed rotational range of the engine.

In order to attain the above object, according to a first feature of the present invention, there is provided a parallel multi-cylinder engine for a motorcycle, comprising a cylinder block and a cylinder head inclined forwards and mounted on a body frame, a plurality of throttle bodies corresponding to each cylinder which are connected to a back surface of said cylinder head in such a posture as to have their upstream ends directed upwards, and an air cleaner for cleaning air flowing into said throttle bodies disposed on the upper side of said engine and comprising an air cleaner case, wherein a plurality of passages, extending in the front-rear direction of the vehicle and parallel to each other, for communication between an air inlet of said air cleaner and said plurality of throttle bodies are formed in said air cleaner, and an intake control valve for opening/closing at least one passage of said plurality of passages is provided in said air cleaner, **characterized in that** said plurality of passages are divided by a partition wall integrally provided on an inner side of said air cleaner case for partitioning an intermediate portion of the non-clean chamber thereof, and said intake control valve is rotatably supported by said partition wall.

Incidentally, the plurality of passages correspond to a small cross-section passage 33a and a large cross-section passage 33b in the embodiment of the present invention which will be described later, and the one passage corresponds to the large cross-section passage 33b.

With the first feature, in a low speed rotational range of the engine, the intake control valve is held in the state of closing at least one of the plurality of passages, whereby when the throttle valve is opened rapidly, the intake air amount is restricted by the other passage, and it is possible to suppress the leaning of the air-fuel mixture sucked into the engine and to achieve a good accelerating performance of the engine. When the engine is shifted into a high speed rotational range, the intake control valve is positively opened, whereby the air to be taken into the engine is caused to pass through both the one passage and the other passage, so that the intake resistance is reduced effectively, making it possible to enhance the volume efficiency of the engine and to achieve a high output. Particularly, with the structure in which the plurality of passages for communication between the plurality of throttle bodies connected to the back surface of the cylinder head inclined forwards of the parallel multi-cylinder engine and the air inlet of the air cleaner are disposed along the front-rear direction of the vehicle and in parallel to each other, the intake resistances between the air inlet of the air cleaner and each cylinder can be equalized notwithstanding the presence of the plurality of passages, so that the air taken into the air cleaner can be equally distributed into the plurality of cylinders through the plurality of passages easily and appropriately, thereby largely contributing to enhancement of the output performance of the engine.
In addition, according to a second feature of the present invention, in addition to the first feature, the upstream ends of the plurality of throttle bodies are connected to a rear bottom wall of the air cleaner, and a portion of the air cleaner projecting forwards from the throttle bodies is disposed on the upper side of the cylinder head.
With the second feature, the layout of the air cleaner, the plurality of throttle bodies and the engine is rational, and it is possible to dispose them compactly and concentratedly and to easily dispose the air cleaner on the upper side of the engine.
Further, according to a third feature of the present invention, in addition to the second feature, a fuel injection valve is mounted on a rear wall of the throttle bodies.
With the third feature, it is possible to easily perform maintenance of the fuel injection valve without being obstructed by the engine and the air cleaner.
Further, according to a fourth feature of the present invention, in addition to the third feature, a fuel tank to be fitted to the main frame is so disposed as to cover the throttle bodies and the air cleaner on the upper side.
With the fourth feature, the layout of the air cleaner, the plurality of throttle bodies, the engine and the fuel tank is rational, so that it is possible to dispose them compactly and concentratedly, with the result that a comparatively large capacity fuel tank can be disposed on the upper side of the air cleaner.

In the intake control system of this type know, for example, from Japanese Patent Laid-open No. Sho 58-155270, a relief valve is automatically opened by a differential pressure between on the upstream and downstream sides from the relief valve when an intake air amount exceeds a specific value is mounted in an air inlet of an air cleaner of an intake system, and a small air hole is provided in the relief valve. In such an intake control system, when the engine is rapidly accelerated by rapidly opening a throttle valve, an intake air amount is restricted by the small air hole of the relief valve, to suppress the leaning of an air-fuel mixture sucked in the engine, thereby achieving a good accelerating performance; and in a high speed rotational range, the relief valve is opened along with the increase of the intake air amount over a specific value, to reduce the intake resistance.

The above-described prior art system, however, has a problem that since the relief valve is biased by a spring force in the valve closing direction, the spring load acts as the resistance upon opening of the relief valve, to cause an intake resistance corresponding thereto.

Preferably, an actuator for closing the intake control valve in a low speed rotational range of the engine and opening the intake control valve in a high speed rotational range of the engine is connected to the intake control valve.

With this feature, in the low speed rotational range of the engine, the intake control valve is held, by the actuator, in a state in which at least one of the plurality of passages is closed, so that the amount of an intake air passing through only the other passage is restricted upon rapid opening of the throttle valve. As a result, it is possible to suppress the leaning of an air-fuel mixture sucked in the engine, and hence to achieve a good accelerating performance of the engine. When the operational state of the engine is shifted to the high speed rotational range, the intake control valve is positively opened by the actuator, so that air sucked in the engine can pass through not only the one passage not obstructed by the intake control valve but also the other passage. As a result, it is possible to effectively reduce the intake resistance and increase the volume capacity of the engine, and hence to achieve the high output performance of the engine.

Preferably, the air cleaner includes a cleaner case and a cleaner element for partitioning the inside of the cleaner case into a non-clean chamber communicated to atmospheric air and a clean chamber communicated to the intake passage of the throttle body. The clean chamber is disposed, in the cleaner case, on the upper portion of the non-clean chamber; the intake passage of the throttle body is communicated to the clean chamber; the partition wall for partitioning an intermediate portion of the non-clean chamber into a plurality of passages disposed in parallel is provided to the cleaner case; the intake control valve for opening/closing at least one of the plurality of passages is provided to the cleaner case; and an actuator for closing the intake control valve in a high speed rotational range of the engine and opening the intake control valve in a high speed rotational range of the engine is connected to the intake control valve.

With this further feature, in addition to the improved output performance of the engine like the first feature, since the layout of the components in the cleaner case, that is, the layout of the plurality of passages, the intake control valve, and the portion communicated to the intake passage of the throttle body is reasonable, it is possible to make compact the air cleaner, and hence to easily dispose the air cleaner on the upper portion of the engine.

Hereinafter, one embodiment of the present invention will be described with reference to the accompanying drawings.
Fig. 1 is a side view of a motorcycle including intake and exhaust control systems for an engine according to the present invention.
Fig. 2 is a vertical sectional side view showing an essential portion of the intake control system.
Fig. 3 is a view illustrating the function of the intake control system shown in Fig. 2.
Fig. 4 is a sectional view taken on line 4-4 of Fig. 2.
Fig. 5 is a sectional view taken on line 5-5 of Fig. 4.
Fig. 6 is a sectional view taken on line 6-6 of Fig. 4.
Fig. 7 is a perspective view of an exhaust system.
Fig. 8 is a side view of the exhaust control system.
Fig. 9 is a sectional view taken on line 9-9 of Fig. 8.
Fig. 10 is a view illustrating the function of the exhaust control system shown in Fig. 9.
Fig. 11 is a plan view showing a drive system for driving the intake control valve and the exhaust control valve.
Fig. 12 is a sectional view taken on line 12-12 of Fig. 11.
Fig. 13 is a sectional view taken on line 13-13 of Fig. 11.

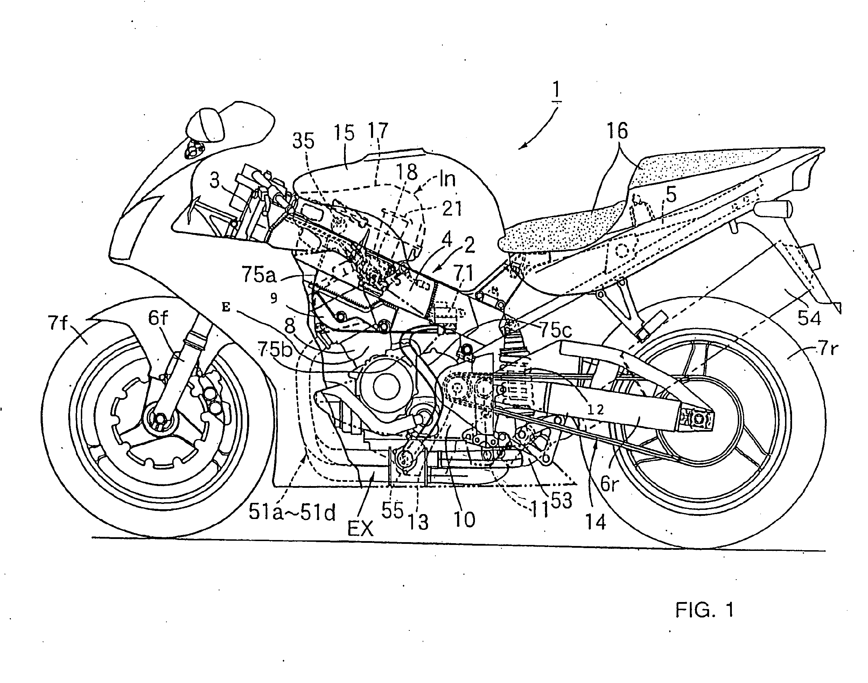

Referring to Fig. 1, a body frame 2 of a motorcycle 1 includes a pair of right and left main frames 4 which have a head pipe 3 at the front ends thereof, extend rearwardly, downwardly therefrom, and are connected to each other at the rear ends thereof; and seat rails 5 connected to the rear ends of the main frames 4 and extending rearwardly, upwardly therefrom. A parallel four-cylinder engine E is mounted on the pair of main frames 4 in such a manner that a cylinder block 8 and a cylinder head 9 are tilted slightly forwardly and the cylinder head 9 is inserted between the main frames 4.

A front fork 6f for rotatably supporting a front wheel 7f is steerably connected to the head pipe 3. A rear fork 6r for supporting a rear wheel 7r is vertically swingably connected, via a pivot 11, to a rear portion of a crank case 10 of the engine E, and a rear cushion unit 12 is interposed between the rear fork 6r and the main frames 4. The rear wheel 7r is driven via a chain transmission system 14 by an output shaft 13, disposed in front of the pivot 11, of the engine E.

A fuel tank 15 is mounted on the main frames 4, and a tandem main seat 16 is mounted on the seat rails 5.

An intake system In of the engine E including an air cleaner 17 and throttle bodies 18 is disposed over the cylinder head 9 in such a manner as to be covered with the fuel tank 15. An exhaust system Ex of the engine E including exhaust pipes 51a to 51d and an exhaust muffler 54 projects from the front surfaces of the cylinder head 9 and the cylinder block 8, passes under the crank case 10, and extends obliquely, upwardly.

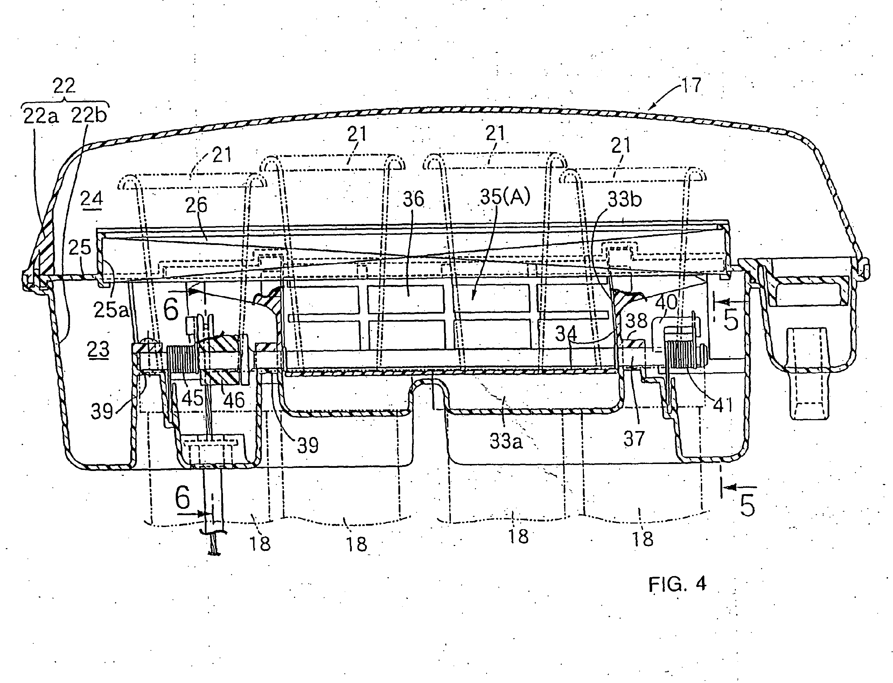

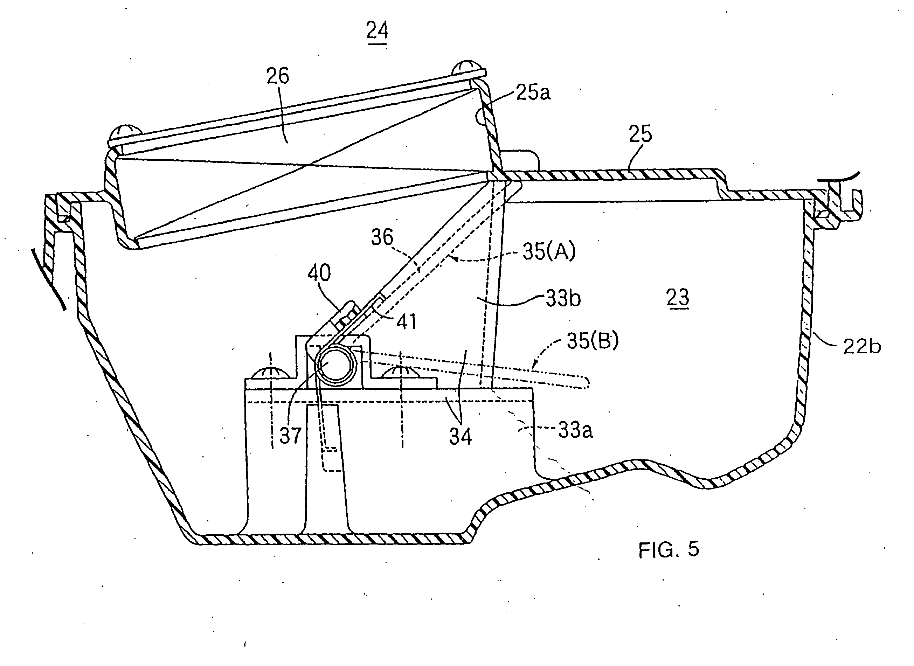

Referring to Figs. 1 to 6, the intake system In of the engine E will be first described.

Referring to Figs. 1 to 4, four pieces of the throttle bodies 18 corresponding to four cylinders of the engine E are connected to the cylinder head 9 of the engine E.
Air funnels 21 are connected respectively to inlets of intake passages 18a of these throttle bodies 18. In addition, a rear bottom wall of a cleaner case 22 of the air cleaner 17 containing all the air funnels 21 is connected to upstream ends of the four throttle bodies 18. A portion of the cleaner case 22 projecting forwards from the throttle bodies 18 is disposed on the upper side of the cylinder head 9. With this arrangement, the layout of the air cleaner 17, the four throttle bodies 18 and the engine E is rational, and it is possible to dispose them compactly and concentratedly and to easily dispose the air cleaner 17 on the upper side of the engine E.
Further, since the fuel tank 15 covering the air cleaner 17 is disposed on the upper side of the air cleaner, the layout of the air cleaner 17, the four throttle bodies 18, the engine E and the fuel tank 15 is rational, and these can be disposed compactly and concentratedly, with the result that a comparatively large capacity fuel tank 15 can be disposed on the upper side of the air cleaner 17.
The cleaner case 22 of the air cleaner 17 is mounted to the four throttle bodies 18 in such a manner as to house all of the air funnels 21. The cleaner case 22 includes a lower case half 22b fixed to the throttle bodies 18, and an upper case half 22a separably connected to the lower case half 22b with a small screw 27. An element mounting plate 25 for partitioning the inside of the cleaner case 22 into a lower side non-clean chamber 23 and an upper side clean chamber 24 is held between both the case halves 22a and 22b. A cleaner element 26 is mounted in a mounting hole 25a provided in the element mounting plate 25.

An air inlet 28 through which the non-clean chamber 23 is opened to atmospheric air is provided in one side surface of the lower case half 22b. On the other hand, the air funnels 21 pass through a bottom wall of the lower case half 22b, and inlets of the air funnels 21 are opened to the clean chamber 24. Accordingly, during operation of the engine E, air having flowed in the non-clean chamber 23 from the air inlet 28 is filtered by the cleaner element 26 and is supplied in the clean chamber 24. The air supplied in the clean chamber 24 flows in the throttle bodies 18 through the air funnels 21. In each of the throttle bodies 18, the flow rate of the air is adjusted by a throttle valve 29. The air whose flow rate has been adjusted by each throttle body 18 is then sucked in the engine E. At this time, fuel is injected from a fuel injection valve 32 mounted on a rear wall of each throttle body 18 into an intake port of the engine E.

Since the fuel injection valve 32 is mounted onto each rear wall of the throttle bodies 18 attached to the back surface of the cylinder head 9 as described above, the fuel injection valve 32 can be easily attached and detached without being obstructed by the engine E and the air cleaner 17, so that maintenance property of the fuel injection valve 32 can be improved.

Valve shafts 29a of the throttle valves 29 provided in the four throttle bodies 18 are interlocked with each other, and are operated to open/close the throttle valves 29 by a throttle grip additionally provided on a steering handlebar of the motorcycle 1 via a pulley 30 fixed on the outermost valve shaft 29a and an operating wire 31 wound around the pulley 30.

A partition wall 34 for partitioning an intermediate portion of the non-clean chamber 23 into a lower small cross-section passage 33a and an upper large cross-section passage 33b is integrally provided on the inner side of the lower case half 22b, and an intake control valve 35 for opening/closing the large cross-section passage 33b is rotatably supported by the partition wall 34.

The intake control valve 35 includes a valve plate 36 and a valve shaft 37 integrally provided on one end of the valve plate 36. One bearing 38 for rotatably supporting one end portion of the valve shaft 37 and a pair of right and left bearings 39 for rotatably supporting the other end portion of the valve shaft 37 are provided on the partition wall 34.

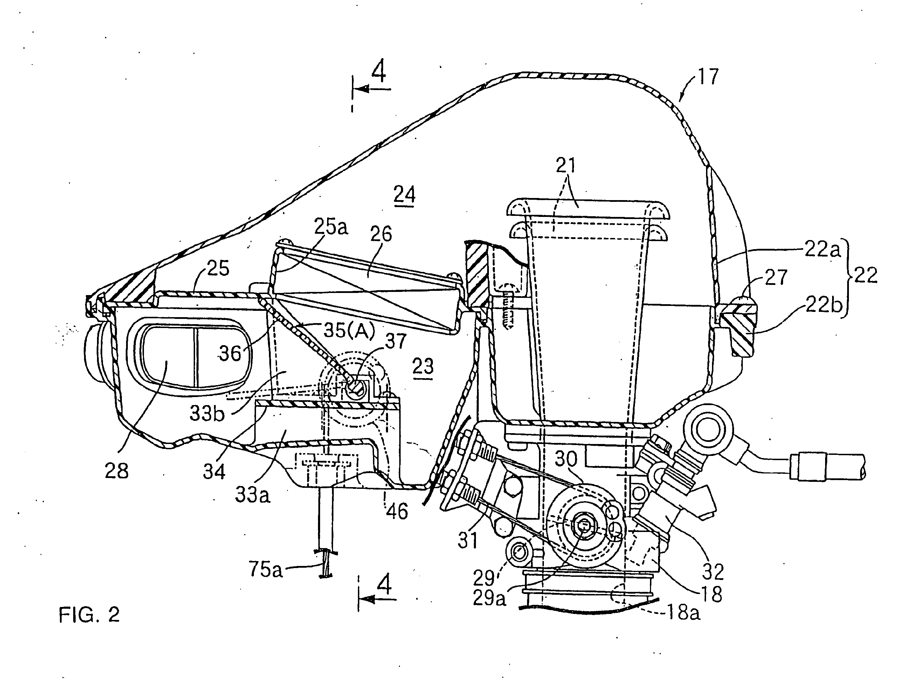

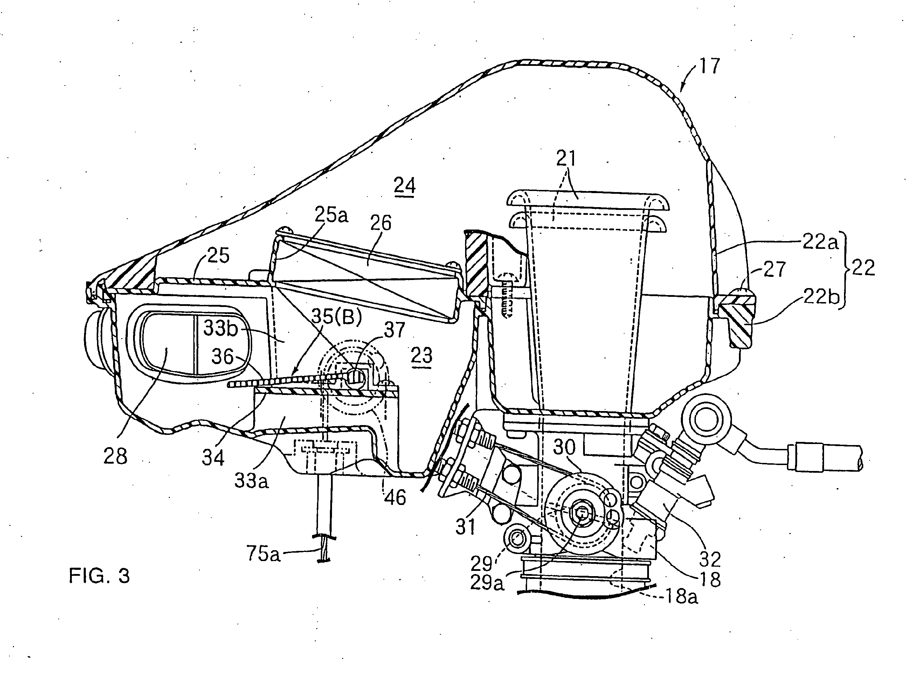

The intake control valve 35 is turned between a first intake control position A (see Fig. 2) and a second intake control position B. At the first intake control position A, the tip of the valve plate 36 is brought into contact with a ceiling surface of the large cross-section passage 33b (see Fig. 3) to fully close the large cross-section passage 33b. At the second intake control position B, the valve plate 36 is thrown down in parallel to the partition wall 34 to fully open the large cross-section passage 33b. In the example of the intake control valve 35 shown in the figures, the turning angle of the intake control valve 35 between the first and second intake control positions A and B is set at approximately 45°. Additionally, at the second intake control position B of the intake control valve 35, the valve plate 36 is tilted with its tip directed to the upstream side of the large cross-section passage 33b, and the intake negative pressure of the engine E acts to bias the valve plate 36 in the closing direction.

An arm 40 is integrally formed on one end portion of the valve shaft 37. A return spring 41 for biasing the valve plate 36 in the closing direction, that is, on the first intake control position A side via the arm 40 is connected to the arm 40. A driven pulley 46 is rotatably mounted on the other end portion of the valve shaft 37 at a position between the pair of bearings 39. The driven pulley 46 is connected to a drive pulley 73 of an actuator 71 (which will be described later) via a first transmission wire 75a. A lost motion mechanism 42 for connecting the driven pulley 46 and the valve shaft 37 to each other is provided between the driven pulley 46 and the valve shaft 37. The lost motion mechanism 42 includes a transmission pin 43 projecting from one side surface of the valve shaft 37, a circular-arc groove 44 formed in the inner peripheral surface of the driven pulley 46 and extending in the circumferential direction to be engaged with the transmission pin 43, and a lost motion spring 45 for biasing the driven pulley 46 on the first intake control position A side of the intake control valve 35. The center angle of the circular-arc groove 44 is set to be larger than the opening/closing angle of the intake control valve 35. That is to say, when the driven pulley 46 is turned from the retreated position in the direction of opening the intake control valve 35, that is, on the second intake control position B side, one end surface of the circular-arc grooves 44 is brought into contact with the transmission pin 43 after it is turned by a specific play angle α, to move the intake control valve 35 on the second intake control position B side.

By the way, the layout of the small cross-section passage 33a, large cross-section passage 33b, intake control valve 35, and air funnels 21 in the cleaner case 22 are reasonable, and thereby the air cleaner can be made compact and easily disposed over the engine.

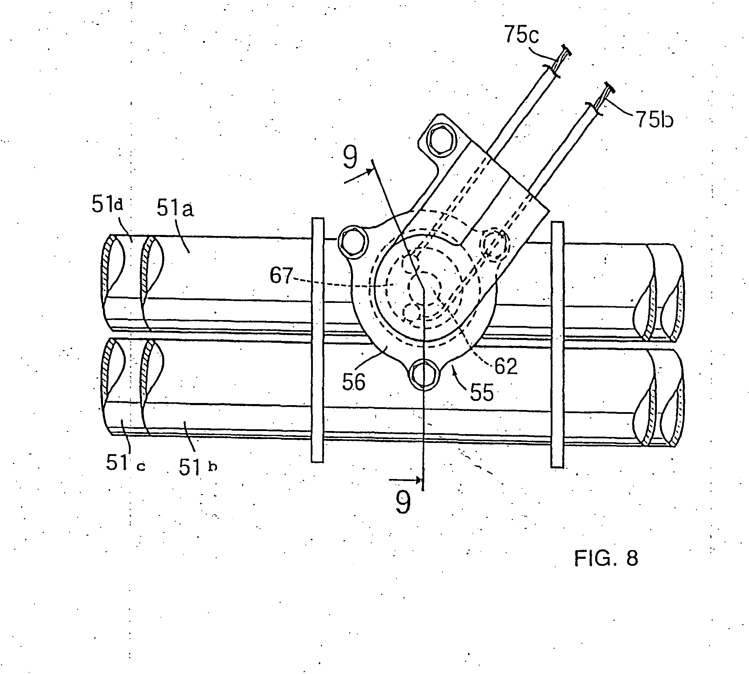

Next, the exhaust system Ex of the engine E will be described in detail with reference to Fig. 1 and Figs. 7 to 10.

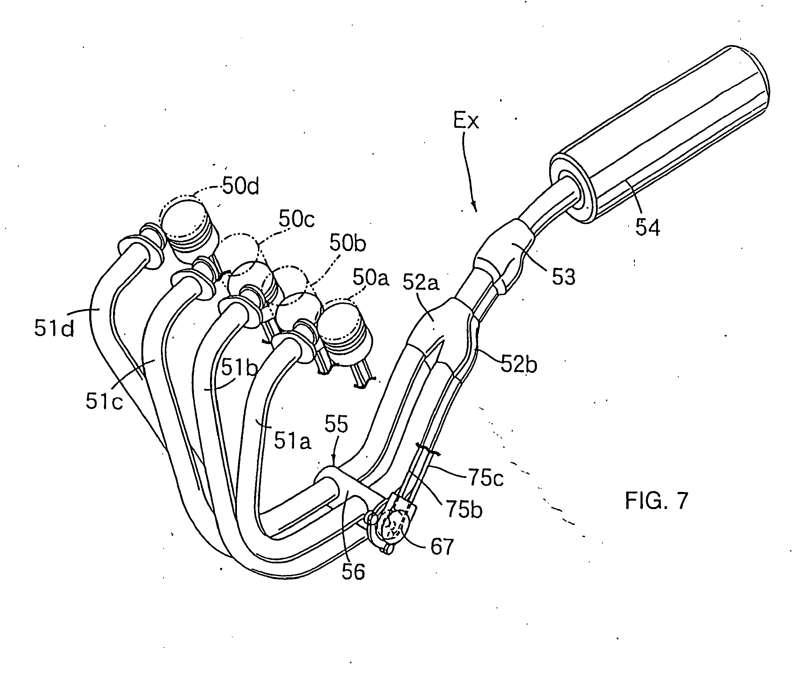

Referring first to Figs. 1 and 7, the parallel four cylinders 50a to 50d of the engine E are arranged in this order from the left side of the vehicle, and ignition of each cylinder is performed in the order of the first, second, fourth, and third cylinders 50a, 50b, 50d and 50c. The first to fourth exhaust pipes 51a to 51d corresponding to the first to fourth cylinders 50a to 50d are connected to the front surface of the cylinder head 9. These exhaust pipes 51a to 51d extend downwardly along the front surface of the engine E and curve rearwardly under the engine E. The first and fourth exhaust pipes 51a and 51d are adjacently disposed in the lateral direction, and the second and third exhaust pipes 51b and 51c are, directly under the first and fourth exhaust pipes 51a and 51d, adjacently disposed in the lateral direction. Of these exhaust pipes 51a to 51d having passed under the engine E, the first and fourth exhaust pipes 51a and 51d are connected to an upper first exhaust collection pipe 52a for collecting the first and fourth exhaust pipes 51a and 51d, and the second and third exhaust pipes 51b and 51c are connected to a lower first exhaust collection pipe 52b for collecting the second and third exhaust pipes 51b and 51c. The exhaust collection pipes 52a and 52b are connected to a second exhaust collection pipe 53 for collecting the exhaust collection pipes 52a and 52b, and the exhaust muffler 54 is connected to the rear end of the second exhaust collection pipe 53.

Under the engine E, a common exhaust control valve 55 is provided to intermediate portions of the first to fourth exhaust pipes 51a to 51d. The exhaust control valve 55 includes a cylindrical valve housing 56 disposed in such a manner as to be perfectly put in the pipe lines of the upper side first and fourth exhaust pipes 51a and 51d and put in the upper portions of the pipe lines of the lower side second and third exhaust pipes 51b and 51c, and a valve body 57 turnably disposed in the valve housing 56. The upper portions of the second and third exhaust pipes 51b and 51c have communication holes 58 opened to the valve housing 56. The first to fourth exhaust pipes 51a to 51d are air-tightly welded to the peripheral wall of the valve housing 56.

Bearings 59 and 60 are provided in both end walls of the valve housing 56, and a pair of valve shafts 61 and 62 projecting from both ends of the valve body 57 are rotatably supported by these bearings 59 and 60. The outer end of one bearing 59 is closed with a plug body 63, and a seal member 64 is mounted to the outer end of the other bearing 60.

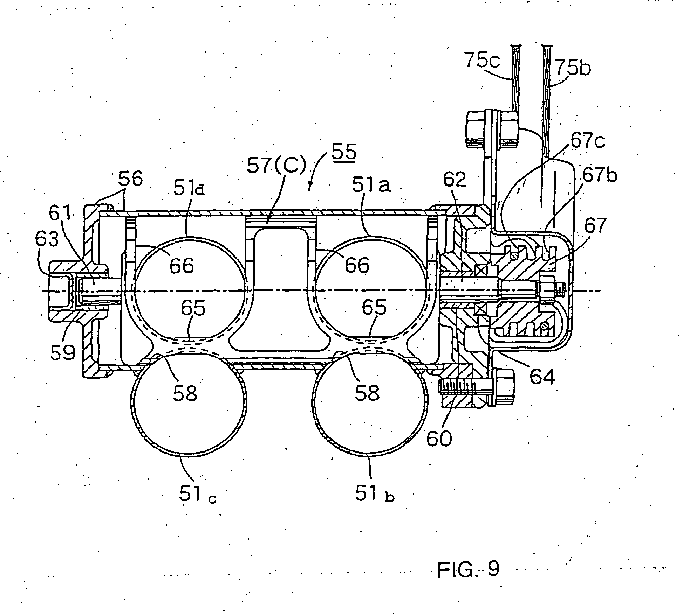

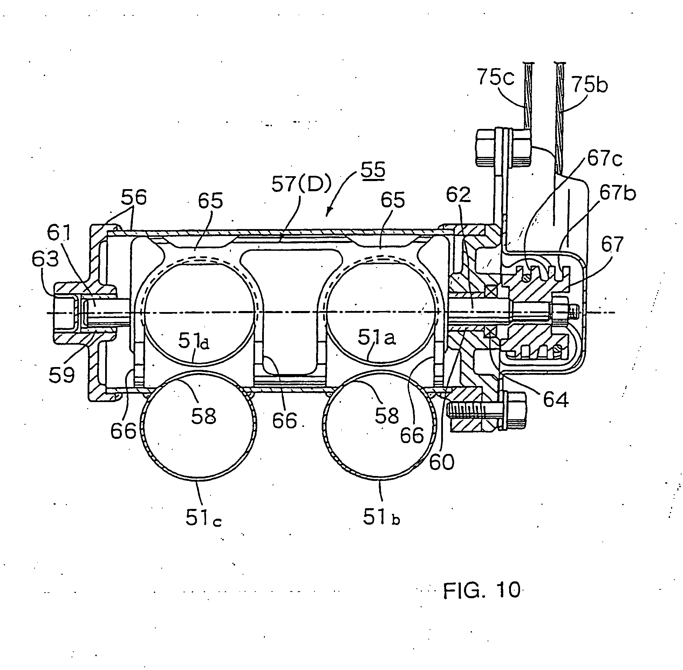

The valve body 57 is approximately 180° rotatable between a first exhaust control position C (see Fig. 9) and a second exhaust control position D (see Fig. 10). The valve body 57 has partition walls 65 for closing the communication holes 58 of the second and third exhaust pipes 51b and 51c at the first exhaust control position C, and guiding walls 66 for communicating the first exhaust pipe 51a to the second exhaust pipe 51b and also communicating the fourth exhaust pipe 51d to the third exhaust pipe 51c via the communication holes 58 at the second exhaust control position D.

The valve shaft 62 supported by the bearing 60 passes through the seal member 64 and projects outwardly therefrom. A driven pulley 67, which is driven by a drive pulley 73 of an actuator 71 to be described later via second and third transmission wires 75b, 75c, is fixed to the projecting end portion of the valve shaft 62.

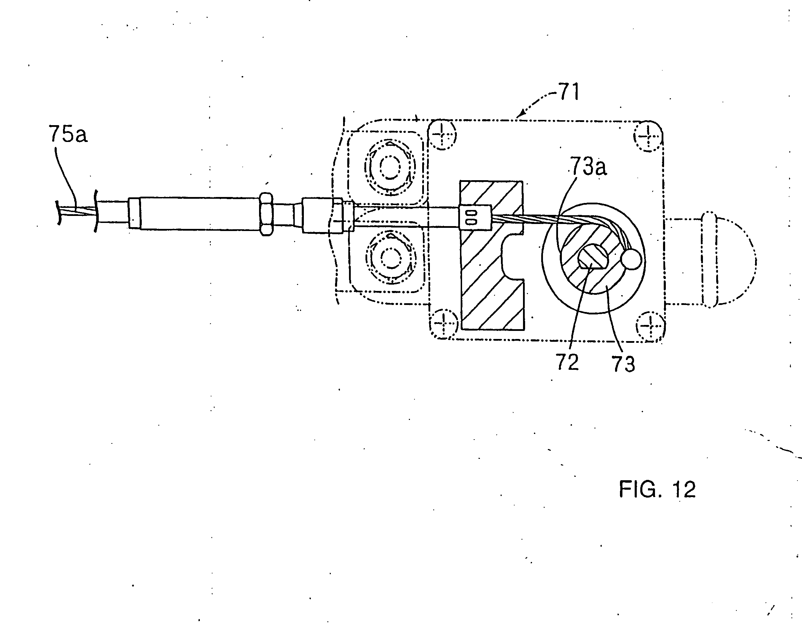

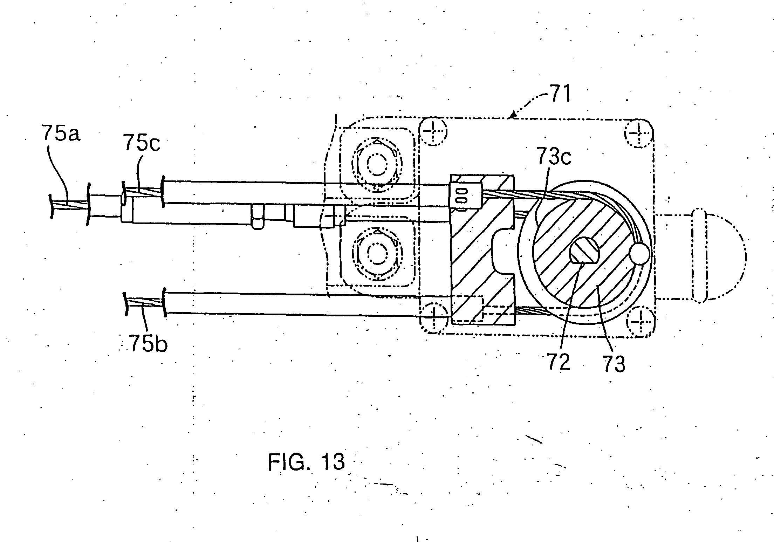

Next, a drive system for driving the intake control valve 35 and the exhaust control valve 55 will be described with reference to Fig. 1 and Figs. 11 to 13.

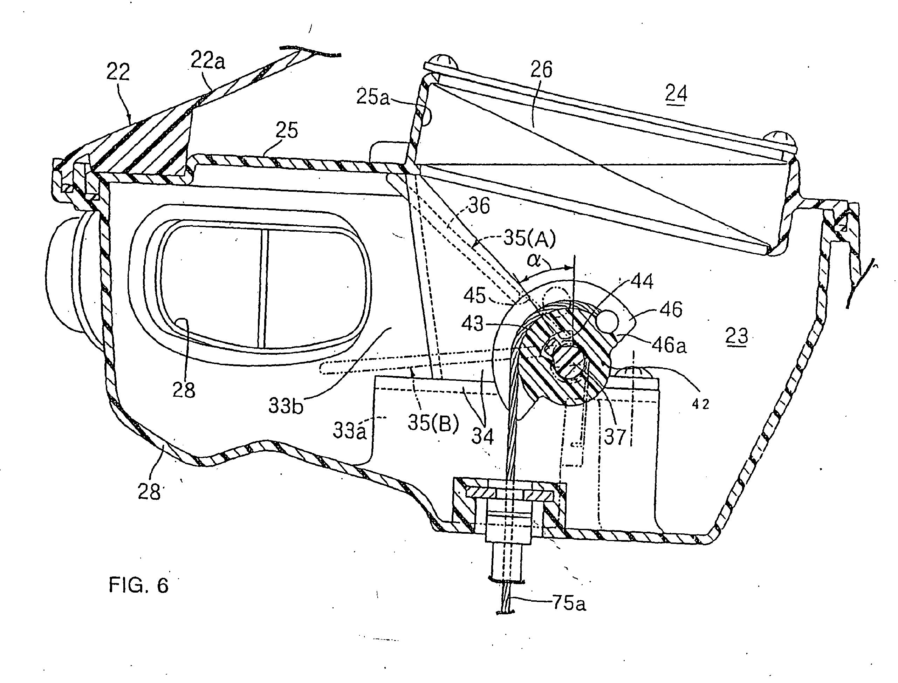

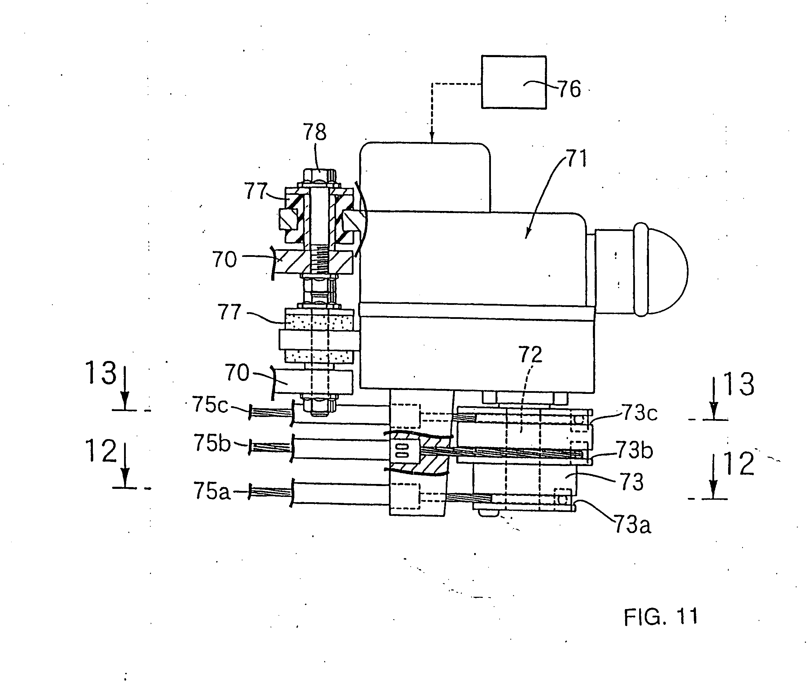

Referring to Figs. 1 and 11, a pair of brackets 70 are fixed on the inner surface of the main frame 4 at a position over the crank case 10 of the engine E, and the common actuator 71 is mounted via an elastic member 77 to the brackets 70 with a bolt 78. In this case, the actuator 71 is disposed such that a distance between the intake control valve 35 and the same is nearly ,equal to a distance between the exhaust control valve 55 and the same. According to the embodiment, as shown in the figures, the actuator 71 is configured as a normally/reversely rotatable electric motor. The drive pulley 73 fixed to an output shaft 72 of the motor has a small-diameter first wire groove 73a, and large-diameter second and third wire grooves 73b and 73c. A first transmission wire 75a is engaged in both the first wire groove 73a and a wire groove 46a of the driven pulley 46 (see Fig. 6) on the intake control valve 35 side, and both terminals of the wire 75a are connected to the drive pulley 73 and the driven pulley 46. The second and third transmission wires 75b and 75c are respectively engaged in the second and third wire grooves 73b and 73c and a pair of wire grooves 67b and 67c of the driven pulley 67 (see Fig. 9) on the exhaust control valve 55 side. In this case, the winding direction of the second transmission wire 75b is opposed to that of the third transmission wire 75c. Both terminals of each of the second and third transmission wires 75b and 75c are connected to the drive pulley 73 and the driven pulley 67.

The drive of the actuator 71 is controlled by an electronic control unit 76 to which signals based on the speed of the engine E and the boosted negative pressure are supplied from sensors (not shown).

The function of this embodiment will be described below.

In the low speed rotational range of the engine E, the electronic control unit 76 operates the actuator 71 to hold the intake control valve-35 at the first intake control position A and to hold the exhaust control valve 55 at the first exhaust control position C.

When the intake control valve 35 is held at the first intake control position A, as shown in Fig. 2, the large cross-section passage 33b is fully closed with the valve plate 36, so that air sucked in the engine E passes through the air cleaner 17 through the small cross-section passage 33a. Accordingly, even if the increment of fuel injected from the fuel injection valve 32 is retarded when the opening degree of the throttle valve 29 is rapidly increased for rapidly accelerating the rotation of the engine E, the amount of intake air supplied in the engine E is suppressed from being excessively increased by the restriction resistance of the small cross-section passage 33a. As a result, it is possible to supply a suitable rich air-fuel mixture to the engine E, and hence to achieve a good accelerating performance.

On the other hand, when the exhaust control valve 55 is held at the first exhaust control position C, as shown in Fig. 9, the communication holes 58 of the second and third exhaust pipes 51b, 51c are closed by the partition walls 65, so that the effective pipe lengths of the first to fourth exhaust pipes 51a to 51d become the maximum lengths extending from the engine,E to the upper and lower first exhaust collection pipes 52a and 52b. The maximum effective pipe length is set such that the exhaust inertia effect and/or exhaust pulsation effect increase the volume efficiency of the engine E in the low speed rotational range. In this way, the low speed output performance of the engine E can be enhanced.

In this way, since the intake system In and the exhaust system Ex have the functions matched to the low speed operational state, respectively, they can effectively enhance the low speed output performance of the engine E.

When the rotational state of the engine E is shifted to the high speed rotational range, the actuator 71 receives a signal matched to the high speed rotational range from the electronic control unit 76, and normally turns the drive pulley 73. With this normal turn of the drive pulley 73, the first and second transmission wires 75a and 75b are simultaneously pulled and the third transmission wire 75c is loosened. As a result, the driven pulley 46 on the intake control valve 35 side is turned on the second intake control position B side, and the driven pulley 67 on the exhaust control valve 55 side is turned on the second exhaust control position D side. In this case, the latter driven pulley 67, which is integrally connected to the valve shaft 62 of the exhaust control valve 55, immediately turns the valve 55 to the second exhaust control position D. On the other hand, the former driven pulley 46 singly turns by the play angle α against the biasing force of the lost motion spring 45 until the transmission pin 43 of the valve shaft 37 comes in contact with one end of the circular-arc groove 44 of the driven pulley 46, and then turns the intake control valve 35 to the second intake control position B against the biasing force of the return spring 41 via the transmission pin 43. In this way, the intake control valve 35 and the exhaust control valve 55 simultaneously reach the second intake control position B and the second exhaust control position D.

When the intake control valve 35 is positively turned to the second intake control position B by the actuator 71, as shown in Fig. 3, the valve plate 36 fully opens the large cross-section passage 33b, with a result that air sucked in the engine E can fully pass through the air cleaner 17, more concretely, pass through not only the large cross-section passage 33b not obstructed by the valve plate 36 but also the small cross-section passage 33a. Accordingly, it is possible to reduce the intake resistance, and hence to enhance the volume efficiency of the engine E and improve the high speed output performance.
Particularly, the small cross-section passage 33a and the large cross-section passage 33b for communication between the four throttle bodies 18 connected to the back surface of the forwardly inclined cylinder head 9 of the parallel four-cylinder engine E and the air inlet 28 of the air cleaner 17 are disposed along the front-rear direction of the vehicle and in parallel to each other, the intake resistances between the air inlet 28 of the air cleaner 17 and each cylinder can be equalized notwithstanding the presence of the passages 33a and 33b, so that the air taken into the air cleaner 17 can be equally distributed into the plurality of cylinders through the passages 33a and 33b easily and appropriately, thereby largely contributing to enhancement of the output performance of the engine E.

On the other hand, when the exhaust control valve 55 is turned to the second exhaust control position D, as shown in Fig. 10, the communication holes 58 are opened, and the first and fourth exhaust pipes 51a and 51d are communicated to the second and third exhaust pipes 51b and 51c by the guiding walls 66, respectively, so that the effective pipe lengths of the first to fourth exhaust pipes 51a to 51d become the minimum lengths extending from the engine E to the exhaust control valve 55. The minimum effective pipe length is set such that the exhaust inertia effect and/or exhaust pulsation effect increase the volume efficiency of the engine E in the high speed rotational range. In this way, the high speed output performance of the engine E can be enhanced.

In this way, since the intake system In and the exhaust system Ex have the functions matched to the high speed operational state, respectively, they can effectively enhance the high speed output performance of the engine E.

By the way, upon normal turn of the drive pulley 73 by the actuator 71, as described above, by suitably retarding the starting of the turn of the intake control valve 35 having a small rotational angle to the second intake control position B from the starting of the turn of the exhaust control valve 55 having a large rotational angle to the second exhaust control position D, the intake control valve 35 and the exhaust control valve 55 different in rotational angle can be simultaneously turned to the second intake control position B and the second exhaust control position D by the common actuator 71.

When the engine E is returned to the low speed rotational range again, the actuator 71 reversely turns the drive pulley 73 to loosen the first and second transmission wires 75a and 75b and pull the third transmission wire 75c. By the loosening of the first transmission wire 75a, the driven pulley 46 is reversely turned by the biasing force of the lost motion spring 45, and the intake control valve 35 is returned to the first intake control position A by the biasing force of the return spring 41.

By the pull of the third transmission wire 75c, the driven pulley 67 is reversely turned and the exhaust control valve 55 is returned to the first exhaust control position C.

In this case, since the intake control valve 35 and the exhaust control valve 55 are simultaneously reversely turned, the intake control valve 35 having a small rotational angle reaches the first intake control position A before the exhaust control valve 55 is returned to the first exhaust control position C. After that, the driven pulley 46 is continuously reversely turned while one end wall of the circular-arc groove 44 is separated from the transmission pin 43 of the intake control valve 35, until the exhaust control valve 55 reaches the first exhaust control position C along with the reverse turn of the drive pulley 73.

In this way, even if there is a large difference between the rotational angles of the intake control valve 35 and the exhaust control valve 55, such a difference can be absorbed by the lost motion mechanism 42, so that both the control valves 35 and 55 can be accurately operated by the common actuator 71. As a result, it is possible to simplify the configuration of the drive system for driving both the control valves 35 and 55, and hence to improve the engine performance while reducing the cost of the drive system and further reduce the weight of the drive system.

The present invention is not limited to the above-described embodiment, and it is to be understood that various changes in design may be made without departing from the scope of the present invention. For example, the intake control valve 35 may be configured such that the effective pipe length of the intake system In is variable depending on the operational state of the engine E. The present invention can be applied to intake systems and exhaust systems of single-cylinder engines and multi-cylinder engines.
The invention provides an intake control system for an engine capable of improving a high speed output performance by certainly reducing an intake resistance in a high speed rotational range of the engine while ensuring a low speed output performance of the engine.
To achieve this a small cross-section passage 33a and a large cross-section passage 33b, which are disposed in parallel, are formed in an air cleaner 17 interposed in an intake system In of an engine E. An intake control valve 35 for opening/closing the large cross-section passage 33b is provided in the air cleaner 17. An actuator 71 for closing the intake control valve 35 in a low speed rotational range of the engine E and opening the intake control valve 35 in a high speed rotational range of the engine E is connected to the intake control valve 35.
The invention securely reduces an intake resistance in a high speed rotational range and thereby to contrive enhancement of a high speed output performance, while securing a low speed output performance of a parallel multi-cylinder engine for a motorcycle.
To achieve this, a plurality of throttle bodies 18 with their upstream ends directed upwards are connected to a back surface of a forwardly inclined cylinder head 9 of a parallel multi-cylinder engine E of a motorcycle, a plurality of passages 33a and 33b, extending in the front-rear direction of the vehicle and parallel to each other, for communication between an air inlet 28 of an air cleaner 17 connected to the upstream ends of the throttle bodies 18 and the plurality of throttle bodies 18 are formed in the air cleaner 17, and an intake control valve 35 for opening/closing at least one passage 33b of the plurality of passages 33a and 33b is provided in the air cleaner 17.

## Claims

1. Parallel multi-cylinder engine (E) for a motorcycle, comprising
• a cylinder block (8) and a cylinder head (9) inclined forwards and mounted on a body frame (2),
• a plurality of throttle bodies (18) corresponding to each cylinder which are connected to a back surface of said cylinder head (9) in such a posture as to have their upstream ends directed upwards,
• and an air cleaner (17) for cleaning air flowing into said throttle bodies (18) disposed on the upper side of said engine (E) and comprising an air cleaner case (22), wherein
a plurality of passages (33a, 33b), extending in the front-rear direction of the vehicle and parallel to each other, for communication between an air inlet (28) of said air cleaner (17) and said plurality of throttle bodies (18) are formed in said air cleaner (17), and an intake control valve (35) for opening/closing at least one passage (33b) of said plurality of passages (33a, 33b) is provided in said air cleaner (17),
**characterized in that** said plurality of passages (33a, 33b) are divided by a partition wall (34) integrally provided on an inner side of said air cleaner case (22) for partitioning an intermediate portion of the non-clean chamber (23) thereof, and said intake control valve (35) is rotatably supported by said partition wall (34).

2. An engine as set forth in claim 1, wherein said upstream ends of said plurality of throttle bodies (18) are connected to a rear bottom wall of said air cleaner (17), and a portion of said air cleaner (17) projecting forwards from said throttle bodies (18) is disposed on the upper side of said cylinder head (9).

3. An engine as set forth in claim 2, wherein a fuel injection valve (32) is mounted onto a rear wall of said throttle bodies (18).

4. An engine as set forth in claim 3, wherein a fuel tank (15) attached to said main frame (4) is so disposed as to cover said throttle bodies (18) and said air cleaner (17) on the upper side.

## Patentansprüche

1. Parallel-Mehrzylindermotor (E) für ein Kraftrad, umfassend:
• einen Zylinderblock (8) und einen Zylinderkopf (9), die nach vorne geneigt sind und an einem Aufbaurahmen (2) angebracht sind,
• eine Mehrzahl von Drosselkörpern (18) entsprechend jedem Zylinder, die mit einer Rückseite des Zylinderkopfs (9) in einer derartigen Lage verbunden sind, dass ihre stromaufwärtigen Enden aufwärts gerichtet sind,
• und einen Luftfilter (17) zum Reinigen von in die Drosselkörper (18) fließender Luft, der an der Oberseite des Motors (3) angebracht ist und ein Luftfiltergehäuse (22) aufweist, worin eine Mehrzahl von Kanälen (33a, 33b), die sich in Längsrichtung des Fahrzeugs und parallel zueinander erstrecken, zur Verbindung mit einem Lufteinlass (28) des Luftfilters (17) und der Mehrzahl von Drosselkörpern (18) in dem Luftfilter (17) ausgebildet sind, und ein Einlasssteuerventil (35) zum Öffnen/Schließen von zumindest einem Kanal (33b) der Mehrzahl von Kanälen (33a, 33b) in dem Luftfilter (17) vorgesehen ist,
**dadurch gekennzeichnet, dass** die Mehrzahl von Kanälen (33a, 33b) durch eine Trennwand (34) unterteilt sind, in die einstückig an einer Innenseite des Luftfiltergehäuses (22) vorgesehen ist, um einen Zwischenabschnitt von dessen nicht sauberer Kammer (23) zu unterteilen, und das Einlasssteuerventil (35) an der Trennwand (34) drehbar gelagert ist.

2. Motor nach Anspruch 1, worin die stromaufwärtigen Enden der Mehrahl von Drosselkörpern (18) mit einer hinteren Bodenwand des Luftfilters (17) verbunden sind, und ein von den Drosselkörpern (18) nach vorne vorstehender Abschnitt des Luftfilters (17) an der Oberseite des Zylinderskopfs (9) angeordnet ist.

3. Motor nach Anspruch 2, worin ein Kraftstoffeinspritzventil (32) an der Rückwand der Drosselkörper (18) angebracht ist.

4. Motor nach Anspruch 3, worin ein an dem Hauptrahmen (4) angebrachter Kraftstofftank (15) so angeordnet ist, dass er die Drosselkörper (18) und den Luftfilter (17) an der Oberseite überdeckt.

## Revendications

1. Moteur multi-cylindre parallèle (E) pour un motocycle, comprenant
• un bloc cylindres (8) et une culasse (9) inclinés vers l'avant et montés sur un corps de cadre (2),
• une pluralité de corps de papillon des gaz (18) correspondant à chaque cylindre qui sont connectés à une surface arrière de ladite culasse (9) dans une position telle à avoir leurs extrémités amonts dirigées vers le haut,
• et un filtre à air (17) pour filtrer l'air circulant dans lesdits corps de papillon des gaz (18) disposés du côté supérieur dudit moteur (E) et comprenant un carter de filtre à air (22), dans lequel
une pluralité de passages (33a, 33b) s'étendant dans la direction avant-arrière du véhicule et parallèles les uns aux autres, pour communication entre une admission d'air (28) dudit filtre à air (17) et ladite pluralité de corps de papillon des gaz (18) sont formés dans ledit filtre à air (17), et un clapet de commande d'admission (35) pour ouvrir/fermer au moins un passage (33b) de ladite pluralité de passages (33a, 33b) est disposé dans ledit filtre à air (17),
**caractérisé en ce que** ladite pluralité de passages (33a, 33b) est divisée par une paroi de séparation (34) disposée solidairement sur un côté interne dudit carter de filtre à air (22) pour séparer une portion intermédiaire de la chambre sans filtration (23) de celui-ci, et ledit clapet de commande d'admission (35) est supporté de manière à pouvoir tourner par ladite paroi de séparation (34).

2. Moteur selon la revendication 1, dans lequel lesdites extrémités amont de ladite pluralité de corps de papillon des gaz (18) sont connectées à une paroi de fond arrière dudit filtre à air (17), et une portion dudit filtre à air (17) faisant saillie vers l'avant desdits corps de papillon des gaz (18) est disposée du côté supérieur de ladite culasse (9).

3. Moteur selon la revendication 2, dans lequel un clapet d'injection de carburant (32) est monté sur une paroi arrière desdits corps de papillon des gaz (18).

4. Moteur selon la revendication 3, dans lequel un réservoir de carburant (15) attaché audit cadre principal (4) est disposé de façon à couvrir lesdits corps de papillon des gaz (18) et ledit filtre à air (17) sur le côté supérieur.
